# EUROPEAN PATENT SPECIFICATION

(11) **EP 4 049 980 B1**
(45) Date of publication and mention of the grant of the patent: **20.12.2023**
(21) Application number: 21159712.5
(22) Date of filing: 26.02.2021
(51) Int. Cl.: C02F 1/52, C02F 1/56, C02F 1/24, C02F 103/06, C02F 103/08

(54) **SEPARATION OF MICROPLASTICS**
TRENNUNG VON MIKROKUNSTSTOFFEN
SÉPARATION DE MICROPLASTIQUES

(43) Date of publication of application: 31.08.2022
(73) Proprietor: Viscofan DE GmbH, 69469 Weinheim (DE)
(72) Inventor: SEßLER, Berthold, 97076 Würzburg (DE); GRIGORIEV, Dmitry, 13437 Berlin (DE); MENGER, Hans-Jörg, 68799 Reilingen (DE)
(74) Representative: Schön, Christoph

(56) References cited:
- AU-A1- 2008 348 262
- CN-A- 107 966 393
- CN-A- 108 177 273
- CN-A- 111 547 935
- CN-A- 111 777 078

## Description

### Field of the invention

The present invention relates to the field of separation of microplastics, in particular to a treatment method of hydrophilic liquids such as tap water, wastewater, groundwater, surface water, brackish water or seawater for the removal of microplastics, and a use of collagen in separating microplastics from hydrophilic liquids.

### Background of the invention

Microplastics are usually defined as plastic fragments, granules and fibrous films with a diameter of less than 5 mm. They have been proven to be abundant in marine waters and sediments, and even a large number of microplastics exist in ecosystems such as rivers, lakes and estuaries. Because micro-plastics are widely distributed in the world, large in quantity, quite toxic, and a carrier of pollutants, they can affect human beings through the food chain, which has attracted the attention of the scientific community and become a hotspot of researchers.

At present various technical devices are known for cleaning wastewater as well as methods for removing coarse solids and/or methods for accelerating chemical decomposition processes. The treatment methods for cleaning wastewater usually comprise the following three separation stages either separately or in combination in any appropriate order:
1. A mechanical treatment step;
2. a biological treatment step; and
3. a chemical treatment step.

Furthermore, it needs to be outlined that microplastics as well as chemical additives, pesticides, pharmaceuticals and degradation products and/or transformation products which may be present in and/or on the surface of microplastics, reach the wastewater of a wastewater treatment plant via various entry and transport routes. Current studies confirm that the concentrations of various micropollutants have risen steadily in recent years and that the above-mentioned state of the art processes reach their limitations in water purification.

For example, DE 199 05 633 C1 describes method for injecting air into a liquid to be clarified for performing an aerobic cleaning.

DE 3 884 956 T2 describes an agitator which is used for uniform mixing of flocculants into wastewater.

EP 3 395 766 A1 describes the purification of aqueous fluids by clarification and adsorption on powdered activated carbon using a fluidized bed made of a mixed slurry of metal hydroxide and powdered activated carbon. Further methods of removing microplastics from water are disclosed in CN 111 547 935 A, CN 111 777 078 A and CN 108 177 273 A.

### Summary of the invention

Based on this state of the art, it is an object of the present invention to provide a nontoxic treatment process for the purification of hydrophilic liquids, especially of tap water, wastewater, groundwater, surface water, brackish water or seawater, which treatment process removes microplastics and/or nanoplastics from said hydrophilic liquids with a high recovery rate.

In order to solve the above object, the present invention provides a treatment method, comprising a step of adding a collagen material or a derivative thereof to a hydrophilic liquid containing microplastic and/or nanoplastic materials which hydrophilic liquid is present in a container so that said microplastic and/or nanoplastic materials present in said hydrophilic liquid, is adsorbed and/or physically bound onto/to the collagen material or the derivative thereof, and separating said adsorbed and/or physically bound microplastic and/or nanoplastic materials from the hydrophilic liquid.

Furthermore, the present invention provides the use of a collagen material or a derivative thereof in separating microplastics from a hydrophilic liquid, such as tap water, wastewater, groundwater, surface water, brackish water or seawater.

### Detailed description of the invention

According to a first aspect the present invention provides a treatment method, comprising a step of adding a collagen material or a derivative thereof to a hydrophilic liquid containing microplastic and/or nanoplastic materials which hydrophilic liquid is present in a container so that said microplastic and/or nanoplastic materials present in said hydrophilic liquid, is adsorbed and/or physically bound onto/to the collagen material or the derivative thereof, and separating said adsorbed and/or physically bound microplastic and/or nanoplastic materials from the hydrophilic liquid.

The hydrophilic liquid comprising microplastics and/or nanoplastics which needs to be purified usually is selected from the group consisting of tap water, wastewater, groundwater, surface water, brackish water or seawater.

When cleaning hydrophilic liquids such as wastewater, groundwater, seawater or tap water, usually the following processes can be carried out either separately or in combination in any appropriate order:
1. A mechanical treatment step;
2. a biological treatment step; and
3. a chemical treatment step.

Thus, for example wastewater treatment often includes a primary mechanical treatment, biological secondary treatment, and chemical tertiary treatment.

In the primary treatment step typically large particle materials and sands are removed by screening or using a grit and/or a primary clarifier.

However, in some cases the primary treatment step of separating particles by a mechanical treatment step may also include a separation of microplastics. In such a case the microplastic particles may be separated from a hydrophilic liquid such as wastewater, by using a membrane, a sieve or a vacuum system in which the microplastics having a specific maximum particle size are retained in the separation medium used. While the pore size of the membrane used can vary in wide ranges, the pore size in such cases is generally in a range of from 10 µm to 5 mm. If a sieve is used, the mesh size used usually is in a range of from 38 µm to 4.75 mm. If the mesh size of the sieve exceeds 5 mm, the size of the pieces of plastic collected will be outside the size-range of microplastics.

A secondary treatment, which is also called biological treatment, usually employs microorganisms to degrade contaminants present in the hydrophilic liquid, for example wastewater.

The treated water obtained from such secondary treatment may further undergo a third treatment such as coagulation, sedimentation, filtration, and disinfection when reuse or recycling is the aim of the effluent. Otherwise, the effluent of secondary treatment can optionally be disinfected and then discharged to the environment.

In a preferred embodiment the treatment method according to the first embodiment of the present invention is carried out in addition to a mechanical and/or biological and/or chemical treatment step, preferably after such a mechanical and/or biological and/or chemical treatment step.

For the purposes of the present invention, the terms "microplastics", "nanoplastics", "microplastic particles" or "nanoplastic particles" should be understood as meaning plastic particles which comprise or consist of a (co)polymer or a combination thereof, in particular a mixture (blend), of polymers and/or copolymers.

According to the present invention all plastic particles having an average diameter (determined by means of ESEM (Environmental Scanning Electron Microscope)) of 100 nm to 5 mm, in particular 1 µm to 5 mm, preferably 10 µm to 1 mm, more preferably 10 µm to 400 µm, especially 20 µm to 100 µm are considered as "microplastics" or "microplastic particles". Particles having an average diameter of 1 to 100 nm are considered as "nanoplastics" or "nanoplastic particles" (nanospheres, nanowires, nanotubes, and nanoplatelets).

The (co)polymers present in said microplastics and/or nanoplastics can be selected from the group consisting of polyethylene (PE) such as ultra-low density polyethylene (ULDPE), low density polyethylene (LDPE) and/or high density polyethylene (HDPE), polypropylene (PP), polystyrene (PS), polyvinyl chloride (PVC), polyurethane (PU) , polyamide (PA), polycarbonate (PC), polytetrafluoroethylene (PTFE), polyoxymethylene (PMO), acrylonitrile-butadiene-styrene copolymer (ABS), polyethylene terephthalate (PET), polymethyl methacrylate (PMMA), polyacrylonitrile (PAN), copolymers of at least two of said polymers and combinations, in particular mixtures (blends), of at least two of the polymers mentioned above, more preferably in particular polyethylene (PE) such as low density polyethylene (LDPE) and/or high density polyethylene (HDPE), polypropylene (PP), polystyrene (PS), and/or polyethylene terephthalate (PET).

In some embodiments the microplastic particles can have an average diameter (determined by means of ESEM (Environmental Scanning Electron Microscope)) of more than 1 mm to 5 mm (so-called large microplastic particles) and/or an average diameter (determined by means of ESEM (Environmental Scanning Electron Microscope)) of 100 nm to 1 mm (so-called small microplastic particles). Especially microplastics having an average diameter of less than 20 µm and nanoplastics having an average diameter of 1 to 100 nm usually cannot be removed in commercial wastewater treatment plants.

In preferred embodiments of the treatment method according to the present invention, the collagen or a derivative thereof to be used, is selected from the group consisting of collagen, a collagen fraction, a collagen hydrolysate, gelatin or a gelatin hydrolysate, more preferably from the group consisting of a collagen hydrolysate or a gelatin hydrolysate, even more preferably a collagen hydrolysate is used as the collagen or a derivate thereof.

As it is well known to a person skilled in the art, native collagen which is not soluble in water, can be treated by heating or mixing with a base or a weak acid, preferably a weak organic or inorganic acid which in water has a pH of 2 to 4.

If native collagen is heated or treated with a base or a weak acid, the bonds between α chains of collagen are cleaved so as to obtain gelatin. When further subjecting the gelatin to an enzymatic degradation, a collagen hydrolysate is produced.

For example, pork skin which is cut into small pieces, can be treated with an inorganic or organic acid such hydrochloric acid or acetic acid in water at a pH of 2 to 4 so as to produce gelatin. Said gelatin may be further treated with a proteolytic enzyme such as pepsin, trypsin, or chymotrypsin for example in an amount of 0.5 to 2.5% by weight relative to the weight of the gelatin at a temperature of 30 to 40⁰C for 0.5 to 10 hours so as to produce a collagen hydrolysate. In a preferred embodiment according to the present invention a collagen hydrolysate is used which has a molecular weight of 500 to 5000 Da, preferably 1000 to 3000 Da (for example if determined via MALDI-TOF analysis).

Furthermore, in preferred embodiments said collagen or derivative thereof is added to the hydrophilic liquid as an aqueous solution or dispersion usually in a concentration of 0.01 to 8.0 wt.-%, preferably 0.05 to 5.0 wt.-%, more preferably 0.1 to 2.0 wt.-%, especially 0.5 to 1.0 wt.-%, based on 100 wt.-% of the hydrophilic liquid to be treated.

According to the present invention it was found that a collagen material or a derivative thereof has a high adsorptive capacity and/or binding ability for microplastics and/or nanoplastics, especially microplastics and/or nanoplastics having a hydrophobic surface, in particular polyethylene (PE) such as low density polyethylene (LDPE) and/or high density polyethylene (HDPE), polypropylene (PP), polystyrene (PS), and polyethylene terephthalate (PET).

Therefore, in the treatment method according to the present invention the microplastic and/or nanoplastic materials are adsorbed and/or physically bound onto/to the collagen material or the derivative thereof. Due to thermodynamic reasons the adsorbed and/or physically bound microplastic and/or nanoplastic particles then accumulate at a boundary of the hydrophilic liquid and air bubbles, preferably on the surface of the hydrophilic liquid so as to form a froth or foam layer in/on a topmost layer of the hydrophilic liquid due to a buoyancy force acting on air bubbles. In a preferred embodiment separation of the froth or foam from the hydrophilic liquid can be improved by using a flotation process, because the collagen material or a derivative thereof used according to the present invention shows a good flotation recovery rate for microplastics and/or nanoplastics, especially microplastics and/or nanoplastics having a hydrophobic surface.

Said froth or foam can efficiently be discharged from the hydrophilic liquid to be purified so as to greatly improve the quality of the hydrophilic liquid such as wastewater.

According to a preferred method, the collagen or a derivative thereof is mixed, preferably stirred, by use of mixing means into the hydrophilic liquid to be treated for a sufficient time in order to adsorb and/or physically bind microplastic and/or nanoplastic particles to/onto the collagen material or a derivative thereof.

The adsorbed and/or physically bound microplastic and/or nanoplastic particles formed usually float in the form of a froth in the container in the upper phase of the hydrophilic liquid to be treated.

In a further preferred embodiment, the addition of the collagen material or a derivative thereof is carried out in a first step, followed by allowing the components to be mixed for a certain period of time (= a residence time). The collagen material or a derivative thereof will adsorb and/or physically bind to the microplastic and/or nanoplastic particles present in the hydrophilic liquid so as to form a froth or foam layer in/on a topmost layer of the hydrophilic liquid. Advantageous residence times in suspension are between 10 seconds and 10 minutes, particularly preferably between 20 seconds and 5 minutes.

Rotating drums, flow mixers or agitating mixers are preferably used as mixing means so as to uniformly mix the components in the container.

Good results have been achieved when using agitating mixers because the adsorbed and/or physically bound microplastic and/or nanoplastic particles can be easily removed as an upper phase.

Preferably, when mixing, preferably stirring, the collagen or a derivative thereof into the hydrophilic liquid to be treated, a carrier gas such as air, nitrogen, oxygen or carbon dioxide, is bubbled or blown into the hydrophilic liquid to be treated (aeration).

If in the treatment method according to the present invention a combined stirring and aeration is carried out, the microplastic and/or nanoplastic particles to be separated usually float faster and adsorb and/or physically bind more reliably to the collagen material.

In a preferred embodiment the gas velocity when introducing the carrier gas into the hydrophilic liquid is in a range of from 1 to 100 Nm³/h per 1 m² surface of the hydrophilic liquid in the container, preferably in a range of from 10 to 80 Nm³/h per 1 m² surface of the hydrophilic liquid in the container, more preferably 20 to 50 Nm³/h per 1 m² surface of the hydrophilic liquid in the container used.

In some embodiments, a carrier gas is introduced in feed quantities of 0 - 10 l/min, preferably 4 - 8 l/min. In preferred embodiments bubbles having a diameter of 0.1 to 10 mm or even up to 5 cm can be generated by introducing carrier gas into the hydrophilic liquid to be treated. Thus, for example bubbles having a diameter of 0.1 to 20 mm, preferably 0.5 to 10 mm, more preferably 0.8 to 4 mm or even up to 5 cm can be generated by introducing carrier gas into the hydrophilic liquid to be treated. In other preferred embodiments microbubbles having a diameter between 20 and 100 µm, preferably between 40 and 70 µm can be generated by introducing carrier gas into the hydrophilic liquid to be treated, because microbubbles having such a diameter have been shown to improve the adsorption and/or physical binding of microplastic and/or nanoplastic particles by the collagen or a derivative thereof.

In one embodiment, the treatment method according to the present invention is an elutriation process or a froth flotation process.

Elutriation is a process in which particles are separated based upon their size, shape and density by using a stream of gas or liquid flowing in a direction opposite to the direction of sedimentation. In order to separate microplastics and/or nanoplastics from sediment, an upward flow of water is directed through a column comprising a hydrophilic liquid and a collagen material or a derivative thereof, thereby inducing fluidization of the sediment and transporting microplastic and/or nanoplastic particles to the upper phase of the hydrophilic liquid.

Froth flotation is a process that selectively separates materials based upon whether they are water repelling (hydrophobic) or have an affinity for water (hydrophilic). According to the present invention a froth flotation process is not only dependent upon the density of the material to be separated, but also depends on the hydrophobic nature of said material.

The separation usually takes place in a container (flotation cell), where water and microplastic and/or nanoplastic particles are put together, and then a carrier gas is continuously injected giving rise to the formation of air bubbles. Furthermore, specific chemical reagents such as frothing agents can be added to the composition in the container so as to promote a selective formation of aggregates between microplastic and/or nanoplastic particles, a collagen material or a derivative thereof and air bubbles. After collision, aggregates of microplastic and/or nanoplastic particles and a collagen material or a derivative thereof adhere to the air bubbles, moving upwards to the top of flotation cell where they are recovered as a floated froth product. Hydrophilic particles usually settle in the mixture and become a non-floated product.

In order to effectively carry out a froth flotation process, it is important to consider several parameters such as the surface free energy of the microplastics and/or nanoplastics and the surface tension of the liquid in the flotation bath, as well as the critical surface tension, which defines the surface tension at which the liquid completely wets the solid microplastics and/or nanoplastics. In order to selectively separate hydrophobic microplastics and/or nanoplastics from the hydrophilic liquid, the microplastic and/or nanoplastic particles should only partially be wetted by the liquid in the flotation bath, thereby allowing the collagen material or a derivative thereof to adhere to the surface of the microplastic and/or nanoplastic particles and bring the microplastics and/or nanoplastics to the surface of the liquid phase to be collected.

In some embodiments of the present invention when the microplastics and/or nanoplastics are removed by using a froth flotation process, a frothing agent may be added to the hydrophilic liquid together with a collagen material or a derivative thereof in order to improve the microplastics and/or nanoplastics flotation recovery rate. Especially it was found by the present inventors that when using pine oil, a xylenol, a polyethylene glycol and/or methyl isobutyl carbinol, more preferably pine oil and/or methyl isobutyl carbinol, as a frothing agent, flotation recovery rate of microplastics and/or nanoplastics such as PVC can be improved, while when adding methyl isobutyl carbinol the flotation recovery rate of microplastics such as PET can be improved.

In one preferred embodiment, said froth flotation process can be carried out in a continuous manner, wherein a hydrophilic liquid, collagen or a derivative thereof and preferably a flow of carrier gas is continuously introduced into a container. Furthermore, it is preferred that the container is continuously mixed by using a mixing means.

In some embodiments of a continuous froth flotation method according to the present invention in carried out in two or more containers in series so as to improve the removal degree of the microplastics and/or nanoplastics from the hydrophilic liquid to be treated.

When carrying-out a continuous froth flotation method, said method usually comprises the following steps:
(i) Placing a hydrophilic liquid comprising microplastic and/or nanoplastic particles in a container;
(ii) Adding a collagen material or a derivative thereof as a flotation agent,
(iii) Mixing the components in the container optionally in the presence of a flow of carrier gas introduced into the hydrophilic liquid; and
(iv) Discharging the froth collected in the upper phase of the container.

According to a second aspect the present invention provides the use of a collagen material or a derivative thereof in separating microplastics and/or nanoplastics from a hydrophilic liquid, such as tap water, wastewater, groundwater, surface water, brackish water or seawater.

In a preferred embodiment of the second aspect said collagen material or a derivative thereof having a particle size of from 100 to 1500 µm is used in separating microplastics and/or nanoplastics from a hydrophilic liquid.

The present invention will further be described using several examples of embodiments, but without limiting the scope of the invention.

### Example 1

A. 20 g of collagen hydrolysate having a molecular weight in a range of 1000 to 3000 Da were dissolved in 200 ml of a dilute aqueous buffer solution having a pH value of 5.2 (on the basis of purified water) under continuous stirring at room temperature and 300 rpm for 3 hours.
B. 20 g of plastic microparticles made of polyethylene terephthalate (PET) having a size distribution of 0.1 to 100 µm (upper size cut-off: 300 µm) were dispersed in 200 ml of purified water by means of laboratory shaker at 240 rpm over night.
C. The solution obtained in step A and the dispersion prepared in step B were mixed before the start of flotation experiment and the resulting mixture was continuously stirred on the magnetic stirrer during the entire time of the experiment.

85 ml of the mixture prepared in step C were filled in a glass column having a height of 600 mm and an inner diameter of 30 mm equipped at its bottom with a porous glass plate having a pore-size distribution of from 10 to 16 µm. The column had a scale with a millimeter certainty on its outer side. After pouring the mixture into the column, a flow of gaseous nitrogen with a volumetric flow rate of 1260 cm³/minute and a pressure of 310 mbar was passed through a porous glass plate. The gas flow through the porous plate caused formation of bubbles on the side of the glass plate facing the liquid mixture present in the column. These bubbles, growing and detaching due to an increase of buoyancy force, floated up and formed a growing foam layer on the surface of the liquid phase in the column. During passing through the bulk of the liquid phase, the bubbles collected the microparticles of PET dispersed in the liquid phase and brought them to the foam layer so that they were separated from the liquid phase. When the level of the foam layer attained a height close to the height of glass column, for example when the height of the foam layer grew to a level of approximately 570 to 580 mm, it was collected by vacuum pump into a collection vessel placed between the pump and a collecting capillary. This procedure of foam flotation of PET microparticles was repeated several times and the time needed for each cycle was dependent on the final foam level in the column and on the level inside the column which could be reached with the capillary, but usually lasted not more than a few tens of seconds. The flotation experiment was stopped after 5 minutes and 30 seconds.

The PET microparticles collected by foam flotation as described above were then filtered with an appropriate paper filter and washed several times to remove the collagen attached thereto. The amount of separated PET microparticles was determined gravimetrically using an analytical balance. Based on the total amount of foam collected by the vacuum pump, the final concentration of the PET microparticles collected in the foam flotation experiment, was determined. The concentration obtained was 3.4 wt%. When comparing this concentration with the initial concentration of the PET microparticles in the mixture prepared in step C, the amount of PET microparticles removed from the initial liquid mixture by foam flotation using the collagen hydrolysate as flotation agent, was more than 75 %.

### Example 2

In the same way as described in Example 1 a liquid mixture of the solution described in Example 1A and the dispersion described in Example 1B was prepared, except that the dispersion produced did not contain PET microparticles, but microparticles made of poly(styrene-co-divinylbenzene) (PS) having a size distribution of 0.1 to 100 µm.

The conditions of the foam flotation experiment were the same as those described in Example 1, except that the flotation experiment was stopped after 5 minutes and 20 seconds. As a result, the final concentration of the PS microparticles collected during the foam flotation experiment was 3.0 wt% (recovery rate: more than 66 %).

## Claims

1. A method of treating a hydrophilic liquid comprising microplastics and/or nanoplastics, wherein said method comprises the steps of adding a collagen material or a derivative thereof to the hydrophilic liquid comprising microplastic and/or nanoplastic materials which hydrophilic liquid is present in a container so as to adsorb and/or physically bind said microplastic and/or nanoplastic materials present in said hydrophilic liquid, and separating said adsorbed and/or physically bound microplastic and/or nanoplastic materials from the hydrophilic liquid.

2. The method as claimed in claim 1, wherein the hydrophilic liquid is selected from the group consisting of tap water, wastewater, groundwater, surface water, brackish water or sea water.

3. The method as claimed in claim 1 or 2, wherein the hydrophilic liquid comprising microplastics and/or nanoplastics has already been subjected to a mechanical and/or biological and/or chemical treatment step.

4. The method as claimed in any one of claims 1 to 3, wherein the collagen or derivative thereof to be used, is selected from the group consisting of collagen, a collagen fraction, a collagen hydrolysate, gelatin or a gelatin hydrolysate.

5. The method as claimed in claim 4, wherein a collagen hydrolysate having a molecular weight of 500 to 5,000 Da is used as the collagen or derivative to be used.

6. The method as claimed in claim 5, wherein a collagen hydrolysate having a molecular weight of 1,000 to 3,000 Da is used as the collagen or derivative to be used.

7. The method as claimed in any one of claims 1 to 6, wherein a carrier gas, preferably air, nitrogen, oxygen or carbon dioxide, is bubbled or blown into the hydrophilic liquid to be treated.

8. The method as claimed in claim 7, wherein the carrier gas is introduced into the hydrophilic liquid at a gas velocity in a range of from 1 to 100 Nm³/h per 1 m² surface of the hydrophilic liquid in the container.

9. The method as claimed in claim 8, wherein the carrier gas is introduced into the hydrophilic liquid at a gas velocity in a range of 20 to 50 Nm³/h per 1 m² surface of the hydrophilic liquid in the container.

10. Use of a collagen material or a derivative thereof in separating microplastics and/or nanoplastics from a hydrophilic liquid comprising microplastics.

11. Use according to claim 10, wherein the hydrophilic liquid is selected from the group consisting of tap water, wastewater, groundwater, surface water, brackish water or seawater.

12. Use according to claim 10 or 11, wherein said collagen material or a derivative thereof has a particle size in a range of from 100 to 1500 µm.

13. Use according to any one of claims 10 to 12, wherein a collagen hydrolysate having a molecular weight of 500 to 5,000 Da is used as the collagen or derivative to be used.

14. Use according to claim 13, wherein a collagen hydrolysate having a molecular weight of 1,000 to 3,000 Da is used as the collagen or derivative to be used.

## Patentansprüche

1. Verfahren zur Behandlung einer hydrophilen Flüssigkeit, die mikroplastische und/oder nanoplastische Materialien umfasst, wobei das Verfahren die Schritte des Zugebens eines Kollagenmaterials oder eines Derivats hiervon zu der Mikroplastik- und/oder Nanoplastikmaterialien umfassenden hydrophilen Flüssigkeit, wobei die hydrophile Flüssigkeit in einem Behälter vorliegt, um so die in der hydrophilen Flüssigkeit vorhandenen Mikroplastik- und/oder Nanoplastikmaterialien zu adsorbieren und/oder physikalisch zu binden, und des Trennens der adsorbierten und/oder physikalisch gebundenen Mikroplastik- und/oder Nanoplastikmaterialien von der hydrophilen Flüssigkeit umfasst.

2. Verfahren gemäß Anspruch 1, wobei die hydrophile Flüssigkeit aus der Gruppe ausgewählt ist, die aus Leitungswasser, Abwasser, Grundwasser, Oberflächenwasser, Brackwasser oder Meerwasser besteht.

3. Verfahren gemäß Anspruch 1 oder Anspruch 2, wobei die hydrophile Flüssigkeit, die Mikroplastik- und/oder Nanoplastikmaterialien umfasst, bereits einem mechanischen und/oder biologischen und/oder chemischen Behandlungsschritt unterzogen wurde.

4. Verfahren gemäß einem der Ansprüche 1 bis 3, wobei das zu verwendende Kollagen oder Derivat hiervon aus der Gruppe ausgewählt ist, die aus Kollagen, einer Kollagenfraktion, einem Kollagenhydrolysat, Gelatine oder einem Gelatinehydrolysat besteht.

5. Verfahren gemäß Anspruch 4, wobei ein Kollagenhydrolysat mit einem Molekulargewicht von 500 bis 5.000 Da als das zu verwendende Kollagen oder Derivat verwendet wird.

6. Verfahren gemäß Anspruch 5, wobei ein Kollagenhydrolysat mit einem Molekulargewicht von 1.000 bis 3.000 Da als das zu verwendende Kollagen oder Derivat verwendet wird.

7. Verfahren gemäß einem der Ansprüche 1 bis 6, wobei ein Trägergas, vorzugsweise Luft, Stickstoff, Sauerstoff oder Kohlenstoffdioxid, in die zu behandelnde hydrophile Flüssigkeit eingeperlt oder eingeblasen wird.

8. Verfahren gemäß Anspruch 7, wobei das Trägergas in die hydrophile Flüssigkeit mit einer Gasgeschwindigkeit in einem Bereich von 1 bis 100 Nm³/h pro 1 m² Oberfläche der hydrophilen Flüssigkeit in dem Behälter eingeleitet wird.

9. Verfahren gemäß Anspruch 8, wobei das Trägergas in die hydrophile Flüssigkeit mit einer Gasgeschwindigkeit in einem Bereich von 20 bis 50 Nm³/h pro 1 m² Oberfläche der hydrophilen Flüssigkeit in dem Behälter eingeleitet wird.

10. Verwendung eines Kollagenmaterials oder eines Derivats hiervon zur Abtrennung von Mikroplastik- und/oder Nanoplastikmaterialien aus einer hydrophilen Flüssigkeit, die mikroplastische Materialien enthält.

11. Verwendung gemäß Anspruch 10, wobei die hydrophile Flüssigkeit aus der Gruppe ausgewählt ist, die aus Leitungswasser, Abwasser, Grundwasser, Oberflächenwasser, Brackwasser oder Meerwasser besteht.

12. Verwendung gemäß Anspruch 10 oder Anspruch 11, wobei das Kollagenmaterial oder ein Derivat hiervon eine Partikelgröße in einem Bereich von 100 bis 1500 µm aufweist.

13. Verwendung gemäß einem der Ansprüche 10 bis 12, wobei ein Kollagenhydrolysat mit einem Molekulargewicht von 500 bis 5.000 Da als das zu verwendende Kollagen oder Derivat verwendet wird.

14. Verwendung gemäß Anspruch 13, wobei ein Kollagenhydrolysat mit einem Molekulargewicht von 1.000 bis 3.000 Da als das zu verwendende Kollagen oder Derivat verwendet wird.

## Revendications

1. Procédé de traitement d'un liquide hydrophile comprenant des microplastiques et/ou des nanoplastiques, dans lequel ledit procédé comprend les étapes d'ajout d'un matériau de collagène ou d'un dérivé de celui-ci au liquide hydrophile comprenant des matériaux microplastiques et/ou nanoplastiques, le liquide hydrophile étant présent dans un récipient, de manière à adsorber et/ou physiquement lier lesdits matériaux microplastiques et/ou nanoplastiques présents dans ledit liquide hydrophile, et de séparation desdits matériaux microplastiques et/ou nanoplastiques adsorbés et/ou physiquement liés du liquide hydrophile.

2. Procédé selon la revendication 1, dans lequel le liquide hydrophile est sélectionné dans le groupe constitué d'eau du robinet, d'eau usée, d'eau souterraine, d'eau de surface, d'eau saumâtre ou d'eau de mer.

3. Procédé selon la revendication 1 ou 2, dans lequel le liquide hydrophile comprenant les microplastiques et/ou les nanoplastiques a déjà été soumis à une étape de traitement mécanique et/ou biologique et/ou chimique.

4. Procédé selon l'une quelconque des revendications 1 à 3, dans lequel le collagène ou le dérivé de celui-ci à utiliser est sélectionné dans le groupe constitué de collagène, d'une fraction de collagène, d'un hydrolysat de collagène, de gélatine ou d'un hydrolysat de gélatine.

5. Procédé selon la revendication 4, dans lequel un hydrolysat de collagène ayant une masse moléculaire de 500 à 5000 Da est utilisé en tant que collagène ou dérivé à utiliser.

6. Procédé selon la revendication 5, dans lequel un hydrolysat de collagène ayant une masse moléculaire de 1000 à 3000 Da est utilisé en tant que collagène ou dérivé à utiliser.

7. Procédé selon l'une quelconque des revendications 1 à 6, dans lequel un gaz vecteur, de préférence l'air, l'azote, l'oxygène ou le dioxyde de carbone, est introduit par barbotage ou par soufflage dans le liquide hydrophile à traiter.

8. Procédé selon la revendication 7, dans lequel le gaz vecteur est introduit dans le liquide hydrophile à une vitesse du gaz dans une plage de 1 à 100 Nm³/h par 1 m² de surface du liquide hydrophile dans le récipient.

9. Procédé selon la revendication 8, dans lequel le gaz vecteur est introduit dans le liquide hydrophile à une vitesse du gaz dans une plage de 20 à 50 Nm³/h par 1 m² de surface du liquide hydrophile dans le récipient.

10. Utilisation d'un matériau de collagène ou d'un dérivé de celui-ci dans la séparation de microplastiques et/ou nanoplastiques d'un liquide hydrophile comprenant des microplastiques.

11. Utilisation selon la revendication 10, dans laquelle le liquide hydrophile est sélectionné dans le groupe constitué d'eau du robinet, d'eau usée, d'eau souterraine, d'eau de surface, d'eau saumâtre ou d'eau de mer.

12. Utilisation selon la revendication 10 ou 11, dans laquelle ledit matériau de collagène ou un dérivé de celui-ci a une taille des particules dans une plage de 100 à 1500 µm.

13. Utilisation selon l'une quelconque des revendications 10 à 12, dans laquelle un hydrolysat de collagène ayant une masse moléculaire de 500 à 5000 Da est utilisé en tant que collagène ou dérivé à utiliser.

14. Utilisation selon la revendication 13, dans laquelle un hydrolysat de collagène ayant un poids moléculaire de 1000 à 3000 Da est utilisé en tant que collagène ou dérivé à utiliser.
